Europäisches Patentamt

European Patent Office

Office européen des brevets

(11) Veröffentlichungsnummer: **0 353 820 B1**

# (12) EUROPÄISCHE PATENTSCHRIFT

(45) Veröffentlichungstag der Patentschrift:
13.11.91 Patentblatt 91/46

(51) Int. Cl.⁵: **B23K 31/00**

(21) Anmeldenummer: **89201980.3**

(22) Anmeldetag: **27.07.89**

(54) **Lötverbindung.**

(30) Priorität: **01.08.88 AT 1937/88**

(43) Veröffentlichungstag der Anmeldung:
**07.02.90 Patentblatt 90/06**

(45) Bekanntmachung des Hinweises auf die
Patenterteilung:
**13.11.91 Patentblatt 91/46**

(84) Benannte Vertragsstaaten:
**CH DE FR GB IT LI**

(56) Entgegenhaltungen:
**DD-A- 242 767**
**DE-A- 2 759 148**
**DE-B- 1 558 902**

(73) Patentinhaber: **METALLWERK PLANSEE
GESELLSCHAFT M.B.H.
A-6600 Reutte, Tirol (AT)**

(72) Erfinder: **Kneringer, Günther, Dr.
Kaiser-Lothar-Strasse 40
A-6600 Reutte (AT)**
Erfinder: **Reheis, Nikolaus, Ing.
A-6460 Jerzens (AT)**
Erfinder: **Thalmann, Walter
Ritterbürgl 7
A-6600 Breitenwang (AT)**

(74) Vertreter: **Lohnert, Wolfgang, Dr.
Metallwerk Plansee GmbH
A-6600 Reutte, Tirol (AT)**

## Beschreibung

Die Erfindung betrifft ein Verfahren zur Herstellung einer Lötverbindung zwischen einem Teil aus pyrolytischem Graphit und einem metallischen Teil.

Graphit ist aufgrund seiner speziellen Eigenschaften, wie hohe thermische Belastbarkeit, gute Wärmeleitfähigkeit und geringe Zerstäubungsrate, unter anderem gut für Wärmeabschirmungen geeignet. Da Graphit andererseits nur geringe mechanische Festigkeit und geringe Duktilität aufweist, wird er für spezielle Anwendungen nur als Werkstoffverbund zusammen mit Metallen eingesetzt, um allen Anforderungen an die spezielle Verwendung gerecht zu werden.

Zu diesem Zweck ist es bekannt, polykristallinen Graphit mit geeigneten metallischen Werkstoffen, wie beispielsweise Kupfer, Inconel, Molybdän oder einer Molybdänlegierung wie TZM zu verlöten. Geeignete Lote sind beispielsweise Legierungen der Elemente Ag, Cu, Ni, Pd, Ti, Zr, Cr mit Anteilen an Kupfer und Titan. Die Lötung erfolgt im Vakuum je nach Zusammensetzung des Lotes bei Temperaturen zwischen 850°C und 1900°C. Derartige Werkstoffverbunde haben sich beispielsweise bei der Herstellung von Bauteilen der "Ersten Wand" oder von Divertoren und Limitern bei Fusionsreaktoren bewährt.

Ein Graphitmaterial, das hinsichtlich thermischer Belastbarkeit, Wärmeleitfähigkeit und geringer Zerstäubungsrate gegenüber polykristallinem Graphit nochmals wesentlich bessere Eigenschaften aufweist ist der sogenannte pyrolytische Graphit.

Pyrolytischer Graphit wird durch Abscheiden aus der Gasphase hergestellt. Dabei kommt es zu einer Orientierung von atomaren bzw. kristallographischen Schichten. Diese sogenannte Schichtung des pyrolytischen Graphits führt zum Unterschied von polykristallinem Graphit, der isotrope Eigenschaften aufweist, zu anisotropen Eigenschaften. Durch spezielle Nachbehandlungsmethoden, wie Glühen oder Glühen bei gleichzeitiger Druckanwendung, lassen sich verschiedene Qualitäten (z.B. annealed, compression annealed) mit geringen Unterschieden in den einzelnen Eigenschaften herstellen.

So weist pyrolytischer Graphit eine gegenüber polykristallinem Graphit wesentlich verbesserte Wärmeleitfähigkeit parallel zu seiner Schichtung auf. Gleichzeitig ist die mechanische Festigkeit in dieser Richtung sehr hoch und die thermische Ausdehnung sehr gering.

Demgegenüber ist die Wärmeleitfähigkeit und die mechanische Festigkeit senkrecht zur Schichtung nur gering, die thermische Ausdehnung dagegen hoch.

Aufgrund dieser speziellen Eigenschaften ist es schwierig, pyrolytischen Graphit mit Metallen, die in der Regel isotrope Eigenschaften aufweisen, zu verlöten.

Lötverfahren, die sich beim Verlöten von polykristallinem Graphit mit Metall bewährt haben, sind für eine zufriedenstellende Verbindung von pyrolytischem Graphit mit Metallen nicht geeignet. Vor allem kommt es bei Anwendung dieser Lötverfahren zu nicht tolerierbaren Rissen im pyrolytischen Graphit, die sich sowohl parallel als auch senkrecht zu seiner Schichtung ausbreiten.

Aufgabe der Erfindung ist es daher, ein Verfahren zur Herstellung einer Lötverbindung zwischen pyrolytischem Graphit und Metallen zu schaffen, bei dem die erzielte Lötverbindung allen thermischen und mechanischen Anforderungen genügt und bei der keine Rißbildung im pyrolytischen Graphit auftritt.

Erfindungsgemäß wird dies dadurch erreicht, daß die zu verbindenden Teile aus pyrolytischem Graphit und Metall nicht direkt, sondern unter Zwischenschaltung eines Teiles aus kohlefaserverstärktem Graphit miteinander verlötet werden, wobei pyrolytischer Graphit und kohlefaserverstärkter Graphit so zueinander angeordnet werden, daß die Schichtung des pyrolytischen Graphits in etwa parallel zur Hauptorientierungsebene der Kohlefasern des kohlefaserverstärkten Graphits verläuft.

Beim kohlefaserverstärkten Graphit sind die Graphitfasern in der Regel unregelmäßig in einzelnen Schichten und letztere in etwa lagenweise übereinander angeordnet und dadurch nur wenig miteinander verkettet. Zwischen den Fasern ist nach einem von mehreren bekannten Verfahren Kohlenstoff eingebracht und mit den Fasern verfestigt.

Derartige Materialien besitzen gegenüber vielen anderen Graphit-Werkstoffen hohe thermische Leitfähigkeit, hohe mechanische Festigkeit und gute Vakuumtauglichkeit.

Kohlefaserverstärkter Graphit ist wie pyrolytischer Graphit ein Material mit anisotropen Eigenschaften, bei dem durch eine bestimmte Orientierung der Kohlefasern im Graphit eine Vorzugsrichtung im Hinblick auf spezielle Eigenschaften erreicht wird. Bei der erfindungsgemäßen Anordnung von pyrolytischem Graphit und kohlefaserverstärktem Graphit wird erreicht, daß die Vorzugsrichtungen der beiden Materialien im Hinblick auf gute thermische Leitfähigkeit und gleichzeitig geringe Wärmeausdehnung gleichgerichtet sind.

Die Dicke des Bauteils aus kohlefaserverstärktem Graphit muß so beschaffen sein, daß mechanische Spannungen, hervorgerufen durch Temperaturgradienten innerhalb des Verbundteils, nicht zu Rissen im kohlefaserverstärkten Graphit führen. Die erforderliche Dicke hängt von den Abmessungen der Lötfläche ab.

In einem besonders vorteilhaften Verfahren werden die zu verlötenden Teile jeweils unter Dazwischenlegen einer Lötfolie aus einer Legierung mit 70 Gew.% Silber, 27 Gew.% Kupfer und 3 Gew.% Titan aufeinander geschichtet und unter Vakuum bei einer Temperatur von ca. 850°C miteinander verlötet.

Im folgenden wird die Erfindung anhand eines Beispieles näher erläutert.

Zur Herstellung einer Lötprobe wurden drei Teile aus pyrolytischem Graphit mit den Abmessungen 75 × 50 × 5 mm mit einem Abstand von jeweils 0,25 mm zueinander unter Zwischenschaltung eines Teiles aus kohlefaserverstärktem Graphit mit einem Teil aus TZM mit den Abmessungen 15 × 50 × 15 mm verlötet. Die Bauteile aus pyrolytischem Graphit wurden dabei so angeordnet, daß die Wärmeleitung Richtung Bauteil aus TZM möglichst groß ist, das heißt, ihre Schichtung verlief senkrecht zur Lötebene. Als kohlefaserverstärkter Graphit wurde eine spezielle Qualität der Firma Carbone Lorraine mit der Bezeichnung "randomly distributed quality" verwendet. Bei dieser Qualität, die sich besonders bewährt hat, werden kurze Kohlenstoffasern, die vorerst ohne spezielle Orientierung angeordnet sind, verpreßt und mittels CVD-Verfahren (Chemical vapour deposition) mit reinem Kohlenstoff imprägniert. Durch das Pressen der Kohlenstoffasern wird eine gewisse Orientierung der Fasern erreicht, so daß die Hauptorientierungsebene der Kohlefasern bei diesem speziellen kohlefaserverstärkten Graphit senkrecht zur Preßrichtung verläuft.

Zum Löten wurde auf den Teil aus TZM eine 0,1 mm starke Lötfolie der Zusammensetzung 70 Gew.% Ag, 27 Gew.% Cu, 3 Gew.% Ti aufgelegt. Darüber wurde ein Teil aus kohlefaserverstärktem Graphit in "randomly distributed quality" mit einer Dicke von 10 mm derart aufgelegt, daß die Hauptorientierungsebene der Kohlefasern parallel zur Schichtung der Teile aus pyrolytischem Graphit verlief. Darüber wurde wiederum eine 0,1 mm starke Lötfolie der Zusammensetzung 70 Gew.% Ag, 27 Gew.% Cu und 3 Gew.% Ti aufgelegt. Abschließend wurden die Teile aus pyrolytischem Graphit aufgelegt. Die Anordnung wurde in einen Hochvakuumlötofen eingebracht. Der Ofen wurde auf ein Vakuum von $10^{-5}$ mbar abgepumpt und anschließend während 30 Minuten auf 860°C aufgeheizt. Nach einer Haltezeit von 5 Minuten auf dieser Temperatur wurde der Ofen während 2 Stunden unter Vakuum abgekühlt.

Die Probe wies eine einwandfreie Lötverbindung auf, Risse im Graphit waren auf rasterelektronenmikroskopischen Bildern nicht zu erkennen.

Zur weiteren Beurteilung wurden die Proben im Vakuum zwischen $10^{-1}$ und $10^{-3}$ Pascal während zehn aufeinanderfolgende Zyklen innerhalb 3 Minuten von 200°C auf 700°C näherungsweise gleichmäßig erhitzt und dann innerhalb von 17 Minuten wieder auf 200°C abgekühlt.

Dann wurde die Probe erneut unter dem Rasterelektronenmikroskop untersucht. Weder die Lotverbindung selbst noch die angrenzenden Werkstoffbereiche zeigen irgendwelche Fehler oder Risse.

**Patentansprüche**

1. Verfahren zur Herstellung einer Lötverbindung zwischen einem Teil aus pyrolytischem Graphit und einem metallischen Teil, **dadurch gekennzeichnet,** daß die Teile nicht direkt, sondern unter Zwischenschaltung eines Teiles aus kohlefaserverstärktem Graphit miteinander verlötet werden, wobei pyrolytischer Graphit und kohlefaserverstärkter Graphit so zueinander angeordnet werden, daß die Schichtung des pyrolytischen Graphits in etwa parallel zur Hauptorientierungsebene der Kohlefasern des kohlefaserverstärkten Graphits verläuft.

2. Verfahren zur Herstellung einer Lötverbindung zwischen einem Teil aus pyrolytischem Graphit und einem metallischen Teil nach Anspruch 1, dadurch gekennzeichnet, daß die zu verlötenden Teile jeweils unter Dazwischenlegen einer Lötfolie aus einer Legierung mit 70% Silber, 27% Kupfer und 3% Titan aufeinander geschichtet werden und unter Vakuum bei einer Temperatur von ca. 850°C miteinander verlötet werden.

**Claims**

1. Method of producing a soldered joint between a part made of pyrolytic graphite and a metal part, **characterised in that** the parts are soldered together not directly but with the insertion between them of a part made of carbon fibre reinforced graphite, with pyrolytic graphite and carbon fibre reinforced graphite being disposed in such a way relative to one another that the stratification of the pyrolytic graphite extends approximately parallel to the main orientation plane of the carbon fibres of the carbon fibre reinforced graphite.

2. Method of producing a soldered joint between a part made of pyrolytic graphite and a metal part according to claim 1, characterised in that the parts to be soldered are stacked one on top of the other, with the insertion between each of them of a soldering foil made of an alloy containing 70% silver, 27% copper and 3% titanium, and are soldered together in vacuo at a temperature of around 850°C.

**Revendications**

1. Procédé de fabrication d'une liaison par brasage entre un élément en graphite pyrolytique et un élément métallique, **caractérsisé en ce que** les éléments sont brasés non pas directement entre eux mais en intercalant un élément en graphite armé de fibres de carbone, le graphite pyrolytique et le graphite armé de fibres de carbone étant disposés l'un par rapport à l'autre de telle façon que la stratification du graphite pyrolytique est de tracé à peu près parallèle au plan d'orientation principale des fibres de carbone du graphite armé de fibres de carbone.

2. Procédé de fabrication d'une liaison par brasage entre un élément en graphite pyrolytique et un élément métallique selon la revendication 1, caractérisé en ce que les éléments à braser sont empilés l'un sur l'autre en intercalant respectivement une feuille de brasure en alliage à 70% d'argent, 27% de cuivre et 3% de titane et sont brasés entre eux sous vide à une température d'environ 850°C.